(19) Europäisches Patentamt
European Patent Office
Office européen des brevets

(11) **EP 3 508 906 A1**

(12) **EUROPEAN PATENT APPLICATION**
published in accordance with Art. 153(4) EPC

(43) Date of publication:
**10.07.2019 Bulletin 2019/28**

(21) Application number: **17846259.4**

(22) Date of filing: **23.08.2017**

(51) Int Cl.:
**G02B 27/02** (2006.01)    **B60K 35/00** (2006.01)
**G02B 5/26** (2006.01)    **G02B 5/28** (2006.01)
**G02B 5/32** (2006.01)    **G02B 27/01** (2006.01)
**H04N 5/64** (2006.01)

(86) International application number:
**PCT/JP2017/030172**

(87) International publication number:
**WO 2018/043254 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.09.2016 JP 2016172504**

(71) Applicant: **Konica Minolta, Inc.**
**Tokyo 100-7015 (JP)**

(72) Inventor: **OGURA, Takuya**
**Tokyo 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **VIDEO DISPLAY DEVICE AND OPTICAL SEE-THROUGH DISPLAY**

(57)    A video display device includes: a video display element that displays a video image by emission of image light including visible light; and a holographic optical element that diffracts and reflects the image light. The video display element has light emission peak wavelengths corresponding to the three primary colors R, G, and B in the image light, and the holographic optical element has diffraction peak wavelengths corresponding to the light emission peak wavelengths. Assuming that the diffraction amounts at wavelengths of 400 to 490 nm, 490 to 580 nm, and 580 to 680 nm are the diffraction amounts of B, G, and R, respectively, and (diffraction amount of B)/(sum of diffraction amounts of R, G, and B), (diffraction amount of G)/(sum of diffraction amounts of R, G, and B), and (diffraction amount of R)/(sum of diffraction amounts of R, G, and B) are the diffraction amount ratios of B, Q and R, respectively, the diffraction amount ratio of G is in the range of 5 to 25% and the smallest among the diffraction amount ratios of R, G, and B.

*FIG. 1*

(A)

EP 3 508 906 A1

# FIG. 1

(B)

**Description**

Technical Field

The present invention relates to a video display device and an optical see-through display, and in particular to, for example, a see-through video display device that projectively displays a two-dimensional video image of a liquid crystal display (LCD) element on the observer's eye using a holographic optical element (HOE), and to an optical see-through display (for example, a head mounted display (HMD) and a head-up display (HUD)) including the video display device.

Background Art

Optical elements such as a holographic optical element, a half mirror, and a beam splitter are useful as a combiner mounted on a head mounted display (HMD), a head-up display (HUD), or the like. For example, when displaying a white image using a half mirror, it is possible to obtain a white image by setting the color of the reproduction light source to white. This is because the dependency of the half mirror on the wavelength is low, and the reflectance hardly changes when the wavelength changes. On the other hand, a holographic optical element can tune the diffraction efficiency for each wavelength, and thus can adjust the color tone of an image.

Techniques for tuning the diffraction efficiency of a holographic optical element include the techniques described in Patent Literature 1 and Patent Literature 2. The technique described in Patent Literature 1 expresses a white video image by controlling any one of diffraction efficiency, peak wavelength, and full width at half maximum. The technique described in Patent Literature 2 exposes the hologram photosensitive material so as to obtain the diffraction efficiency according to the light intensity of each of R, G, and B in the light emitted from the reproduction light source. By using the holographic optical element thus obtained, it is possible to obtain an image adjusted to a desired color tone for each of the used reproduction light sources while utilizing the light amount of the light emitted from the reproduction light source to the utmost.

Citation List

Patent Literature

Patent Literature 1: JP 2000-276036 A
Patent Literature 2: JP 2006-184869 A

Summary of Invention

Technical Problem

In the technique described in Patent Literature 1, a white video image is expressed by adjusting the diffraction efficiency, the peak wavelength, and the full width at half maximum in accordance with the light emission characteristic of the video display element. However, the technique described in Patent Literature 1 does not consider the see-through property and the visibility transmittance. In terms of the disclosed RGB diffraction efficiency, it is impossible to obtain a high see-through property because improvement in visibility transmittance cannot be expected. On the other hand, in the technique described in Patent Literature 2, since the light amount of the light emitted from the reproduction light source can be utilized to the utmost, enhancement of brightness is taken into consideration. However, it cannot be said that it is suitable for improving the see-through property.

The present invention has been made in view of the above circumstances, and an object thereof is to provide a video display device that enables observation of an external image with a high see-through property while keeping the quality of a displayed video image high in see-through display in which the video image is superimposed on the external image, and an optical see-through display including the video display device.

Solution to Problem

In order to achieve the above object, a video display device of the present invention includes:

a video display element that displays a video image by emission of image light including visible light; and

a holographic optical element that diffracts and reflects the image light, wherein
the video display element has light emission peak wavelengths corresponding to three primary colors R, G, and B in the image light,
the holographic optical element has diffraction peak wavelengths corresponding to the light emission peak wavelengths, and
assuming that:

a diffraction amount at wavelengths of 400 to 490 nm is a diffraction amount of B;
a diffraction amount at wavelengths of 490 to 580 nm is a diffraction amount of G;
a diffraction amount at wavelengths of 580 to 680 nm is a diffraction amount of R;
(diffraction amount of B)/(sum of diffraction amounts of R, G, and B) is a diffraction amount ratio of B;
(diffraction amount of G)/(sum of diffraction amounts of R, G, and B) is a diffraction amount ratio of G; and
(diffraction amount of R)/(sum of diffraction amounts of R, G, and B) is a diffraction amount ratio of R,
the diffraction amount ratio of G is in a range of 5 to 25% and the smallest among the diffraction amount ratios of R, G, and B.

An optical see-through display of the present invention includes the video display device of the present invention to have a function of projectively displaying the video image on the observer's eye with the holographic optical element in a see-through manner.

Advantageous Effects of Invention

The present invention can implement a video display device that enables observation of an external image with a high see-through property while keeping the quality of a displayed video image high in see-through display in which the video image is superimposed on the external image, and an optical see-through display including the video display device.

Brief Description of Drawings

Fig. 1 is a schematic light guide diagram schematically illustrating the action of a holographic optical element for improving the see-through property.
Fig. 2 is a schematic cross-sectional diagram schematically illustrating an embodiment of a video display device.
Fig. 3 is an optical configuration diagram illustrating an optical path from a light source to an optical pupil in the video display device of Fig. 2.
Fig. 4 is a perspective view illustrating an eyeglasses-type head mounted display including the video display device of Fig. 3.
Fig. 5 is a schematic cross-sectional diagram schematically illustrating an example of an in-vehicle head-up display.
Fig. 6 is a graph illustrating a relative visibility curve.
Fig. 7 is graphs illustrating the light emission characteristic and the diffraction characteristic at white adjustment in Comparative Example and Example.

Description of Embodiments

Hereinafter, a video display device, an optical see-through display, and the like according to an embodiment of the present invention will be described with reference to the drawings. In each embodiment and the like, identical components or corresponding components are denoted by the same reference signs, and redundant explanation will be appropriately omitted.

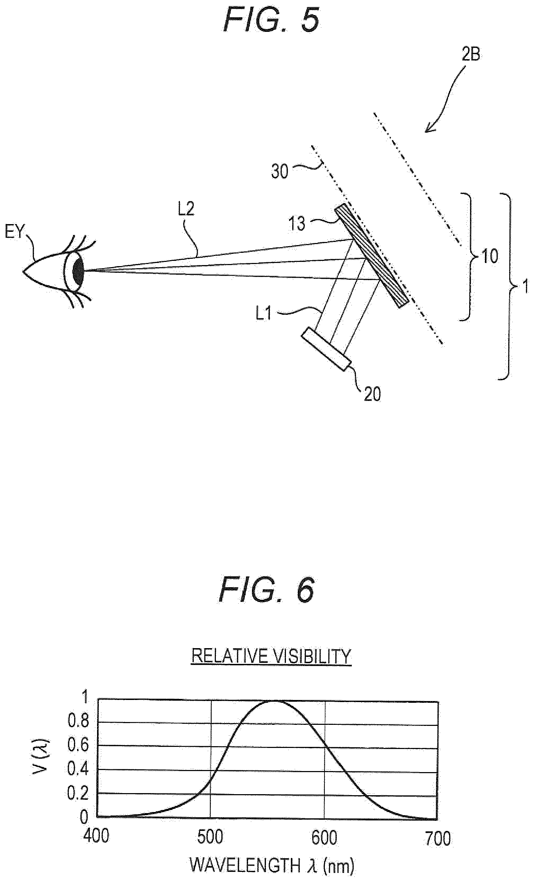

The sensitivity of human eyes varies depending on the wavelength and is determined by the relative visibility $V(\lambda)$ with the peak at the wavelength $\lambda$ : 555 nm (G region) having the highest sensitivity, as can be seen from the relative visibility curve illustrated in Fig. 6. Here, among the three primary colors R, G, and B, the wavelength $\lambda$ of the B region is set to 400 to 490 nm, the wavelength $\lambda$ of the G region is set to 490 to 580 nm, and the wavelength $\lambda$ of the R region is set to 580 to 680 nm.

In a video display device having a video display element that displays a video image by emission of image light and a holographic optical element that diffracts and reflects the image light, the visibility transmittance Tv of the holographic optical element is calculated using the following formula (T1), where
$x(\lambda)$ : relative visibility function,

P($\lambda$) : spectral characteristics (corresponding to diffraction efficiency, full width at half maximum, and peak height) of the holographic optical element, and
SD65($\lambda$) : spectral distribution of CIE standard light source D65.
[Formula 1]

$$Tv = 100 \times \sum_{380nm}^{780nm} x(\lambda) \cdot P(\lambda) \cdot SD65(\lambda) d\lambda \Big/ \sum_{380nm}^{780nm} x(\lambda) \cdot SD65(\lambda) d\lambda \quad ...(T1)$$

As described above, the sensitivity of human eyes (that is, the relative visibility function x($\lambda$) corresponding to relative visibility V($\lambda$)) has a peak at a wavelength of 555 nm, and the ratio of the sensitivity of the G region is high. Therefore, by lowering the diffraction characteristic D($\lambda$) of the G region of the holographic optical element, the visibility transmittance Tv can be increased. Here, the diffraction characteristic D($\lambda$) of the holographic optical element is represented by the following formula (T0):

$$D(\lambda) = P(\lambda) - b(\lambda) ... (T0)$$

where

P($\lambda$) : spectral characteristics (corresponding to diffraction efficiency, peak height, and full width at half maximum) of the holographic optical element, and
b($\lambda$) : baseline due to material absorption or the like.

The diffraction amounts of R, G, and B in the holographic optical element are represented by the following formulas (Db), (Dg), and (Dr) using the diffraction characteristic D($\lambda$). That is, the diffraction amount of B is represented by formula (Db), the diffraction amount of G is represented by formula (Dg), and the diffraction amount of R is represented by formula (Dr). Letting L($\lambda$) be the light emission characteristic of the video display element, the light emission amounts of R, G, and B in the video display element are represented by the following formulas (Lb), (Lg), and (Lr) using the light emission characteristic L($\lambda$). That is, the light emission amount of B is represented by formula (Lb), the light emission amount of G is represented by formula (Lg), and the light emission amount of R is represented by formula (Lr).

[Formula 2]

$$\int_{400}^{490} D(\lambda) d\lambda \quad ...(Db)$$

$$\int_{490}^{580} D(\lambda) d\lambda \quad ...(Dg)$$

$$\int_{580}^{680} D(\lambda) d\lambda \quad ...(Dr)$$

$$\int_{400}^{490} L(\lambda) d\lambda \quad ...(Lb)$$

$$\int_{490}^{580} L(\lambda) d\lambda \quad ...(Lg)$$

$$\int_{580}^{680} L(\lambda) d\lambda \quad ...(Lr)$$

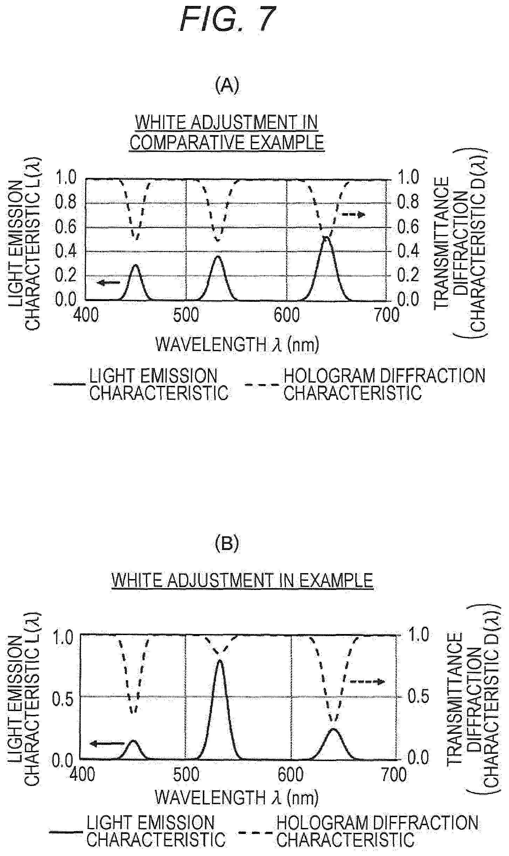

In the graph of the diffraction characteristic D($\lambda$) with respect to the wavelength $\lambda$ (see Fig. 7 to be described later), the peak height at the diffraction peak wavelength of each of R, G, and B corresponds to the diffraction efficiency of each of R, G, and B, and the integral value (area) of the diffraction characteristic D($\lambda$) of each of R, G, and B corresponds to the diffraction amount of each of R, G, and B (formulas (Db), (Dg), and (Dr)). Further, in the graph of the light emission characteristic L($\lambda$) with respect to the wavelength $\lambda$, the peak height at the light emission peak wavelength of each of R, G, and B corresponds to the light emission efficiency of each of R, G, and B, and the integral value (area) of the light emission characteristic L(λ) of each of R, G, and B corresponds to the light emission amount of each of R, G, and B (formulas (Lb), (Lg), and (Lr)). Each diffraction amount can be roughly estimated from the peak height and full width at half maximum of the diffraction characteristic D(λ), and each light emission amount can be roughly estimated from the peak height and full width at half maximum of the light emission characteristic L(λ). Further, the diffraction efficiency, the diffraction peak wavelength, and the full width at half maximum are obtained from the diffraction characteristic D(λ), and the light emission efficiency, the light emission peak wavelength, and the full width at half maximum are obtained from the light emission characteristic L(λ).

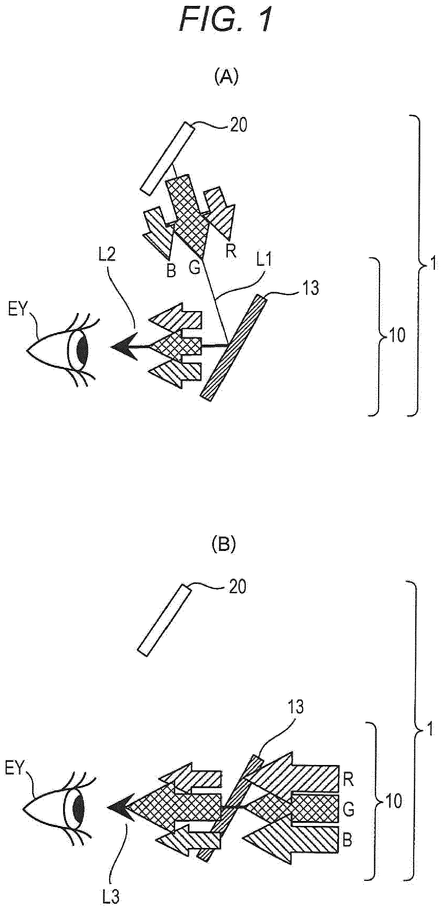

In order to increase the visibility transmittance Tv, if the light intensity of the G region of the video display element is further increased after reducing the diffraction characteristic D(λ) of the G region of the holographic optical element as described above, a reduction in brightness can be suppressed to a minimum, and a good color balance can be obtained. Fig. 1(A) is a diagram illustrating how image light L1 emitted from a video display element 20 is guided to the observer's pupil (observer's eye EY). Among the light emission amounts of R, G, and B in the image light L1 from the video display element 20, the light emission amount of G is larger than the light emission amounts of R and B. That is, the G region of the image light L1 is strongly emitted from the video display element 20. On the other hand, the diffraction characteristic D(λ) of the G region of a holographic optical element 13 is low. As a result, an image with a good RGB color balance is guided to the observer's eye EY.

Fig. 1(B) is a diagram illustrating how external light L3 is guided to the observer's pupil (observer's eye EY). Since the diffraction characteristic D(λ) of the G region of the holographic optical element 13 is low, the G region of the external light L3 that has entered the holographic optical element 13 can be transmitted with a small light amount loss. Since the light amount loss in the G region where human eyes strongly feel brightness is small, the visibility transmittance Tv is high, and the observer can see the outside with a high see-through property.

From the viewpoint described above, the video display device according to an embodiment of the present invention has a video display element that displays a video image by emission of image light including visible light, and a holographic optical element that diffracts and reflects the image light. The video display element has light emission peak wavelengths corresponding to the three primary colors R, G, and B in the image light, and the holographic optical element has diffraction peak wavelengths corresponding to the light emission peak wavelengths. With respect to the diffraction amounts of R, G, and B in the holographic optical element represented by formulas (Db), (Dg), and (Dr) above, assuming that:

the diffraction amount at wavelengths of 400 to 490 nm is the diffraction amount of B;
the diffraction amount at wavelengths of 490 to 580 nm is the diffraction amount of G;
the diffraction amount at wavelengths of 580 to 680 nm is the diffraction amount of R;
(diffraction amount of B)/(sum of diffraction amounts of R, G, and B) is the diffraction amount ratio of B;
(diffraction amount of G)/(sum of diffraction amounts of R, G, and B) is the diffraction amount ratio of G; and
(diffraction amount of R)/(sum of diffraction amounts of R, G, and B) is the diffraction amount ratio of R,
the diffraction amount ratio of G is in the range of 5 to 25% and the smallest among the diffraction amount ratios of R, G, and B.

Adjusting the diffraction characteristic D(λ) of the holographic optical element such that the diffraction amount ratio of G is in the range of 5 to 25% makes it possible to reduce the diffraction efficiency of G of the holographic optical element. As a result, the visibility transmittance Tv of the holographic optical element is increased, so that an external image can be observed with a high see-through property. The visibility transmittance Tv of the holographic optical element can be increased as the diffraction amount of the G region having the highest relative visibility is decreased. However, when the diffraction amount ratio of G is smaller than 5%, the difference in intensity between R, G, and B becomes too large, making it difficult to obtain a good color balance. Further, the result obtained when the diffraction amount ratio of G exceeds 25% is almost the same as when the light emission efficiency ratios of R, G, and B are made equal, and clear effects cannot be obtained with respect to the see-through property.

The diffraction amount ratio of G is more preferably in the range of 5 to 20%. This conditional range specifies a conditional range that is more preferable than the above-mentioned conditional range of 5 to 25% from the above-mentioned viewpoint and the like. Therefore, by satisfying the preferable range of 5 to 20% for the diffraction amount ratio of G, the above effect can be further increased. That is, when the diffraction amount ratio of G is smaller than 20%, a more remarkable effect can be obtained.

Regarding the light emission amounts of R, G, and B in the video display element represented by formulas (Lb), (Lg), and (Lr) above, assuming that:

the light emission amount at wavelengths of 400 to 490 nm is the light emission amount of B;
the light emission amount at wavelengths of 490 to 580 nm is the light emission amount of G;

the light emission amount at wavelengths of 580 to 680 nm is the light emission amount of R;

(light emission amount of B)/(sum of light emission amounts of R, G, and B) is the light emission amount ratio of B;

(light emission amount of G)/(sum of light emission amounts of R, G, and B) is the light emission amount ratio of G; and

(light emission amount of R)/(sum of light emission amounts of R, G, and B) is the light emission amount ratio of R,

the light emission amount ratios of R, G, and B differ from R : G : B = 1: 1: 1, and it is preferable that the light emission amount ratio of G be in the range of 50 to 90% and the largest among the light emission amount ratios of R, G, and B.

Adjusting the light emission characteristic L($\lambda$) of the video display element such that the light emission amount ratios of R, G, and B differ from R : G : B = 1 : 1 : 1 and that the light emission amount ratio of G is in the range of 50 to 90% and the largest among the light emission amount ratios of R, G, and B makes it possible to obtain a good color balance. In other words, by adjusting not only the diffraction characteristic D($\lambda$) of the holographic optical element but also the light emission characteristic L($\lambda$) which is the light intensity of the video display element, it is possible to improve the see-through property and also to improve the quality of a displayed video image.

For example, in a configuration using a half mirror, it is difficult to control the diffraction characteristic D($\lambda$) by wavelength. However, in a configuration using a holographic optical element, it is easy to control the diffraction characteristic D($\lambda$) on a wavelength basis by changing the material or exposure intensity. In order to make use of its characteristics, the light emission of the video display element is set such that G has a great intensity instead of R : G : B = 1 : 1 : 1, whereby it is possible to guide a white video image to the observer's pupil. When the diffraction characteristic D($\lambda$) of the holographic optical element is adjusted such that the diffraction amount ratio of G is in the range of 5 to 25%, it is desirable in order to obtain a good color balance that the light emission characteristic L($\lambda$) of the video display element be adjusted such that the light emission amount ratio of G is equal to or greater than 50%. However, if the light emission characteristic L($\lambda$) of the video display element is adjusted such that the light emission amount ratio of G is greater than 90%, the color balance tends to decrease.

The light emission amount ratio of G is more preferably in the range of 60 to 90%. This conditional range specifies a conditional range that is more preferable than the above-mentioned conditional range of 50 to 90% from the above-mentioned viewpoint and the like. Therefore, by satisfying the preferable range of 60 to 90% for the light emission amount ratio of G, the above effect can be further increased. That is, when the light emission amount ratio of G is greater than 60%, a more remarkable effect can be obtained.

It is preferable that the image light become white reproduced image light with an x, y chromaticity of 0.33 $\pm$ 0.05 in the XYZ colorimetric system by diffraction reflection at the holographic optical element. Adjusting the diffraction characteristic D($\lambda$) of the holographic optical element in this way makes it possible to obtain a good color balance, so that a white video image can be guided to the observer's pupil. Note that X, Y, and Z of the XYZ colorimetric system can be assumed from the light emission characteristic L($\lambda$) of the video display element, the color matching functions of R, G, and B, and the integral of the diffraction characteristic D($\lambda$) of the holographic optical element, and the x, y chromaticity is represented by $X/(X + Y + Z)$ and $Y/(X + Y + Z)$.

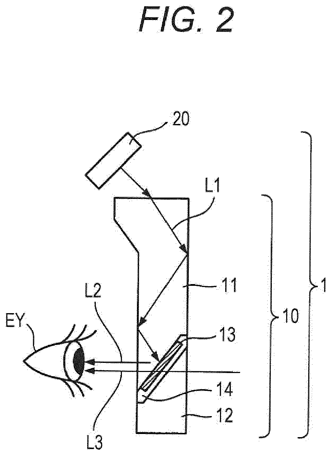

Fig. 2 is a diagram schematically illustrating an embodiment of a video display device. The video display device 1 illustrated in Fig. 2 has an optical device 10 and the video display element 20. The optical device 10 includes transparent first and second prisms 11 and 12, the holographic optical element 13, and the like. The holographic optical element 13 is provided between the first prism 11 and the second prism 12. The holographic optical element 13 is affixed to the first prism 11 and sandwiched between the first prism 11 and the second prism 12 joined by an adhesive 14 provided between the first and second prisms 11 and 12. That is, the first prism 11 and the second prism 12 are joined by the adhesive 14 provided between the first prism 11 with the holographic optical element 13 and the second prism 12. Since the holographic optical element 13 is provided on the joining surface of the transparent prisms 11 and 12, the see-through property (combiner function) for an external image via the joining surface is secured.

In addition to the optical device 10, the video display device 1 includes the video display element 20 that displays a video image by emission of image light including visible light. Examples of the video display element 20 include a reflective or transmissive liquid crystal display (LCD) element, a digital micromirror device, an organic electro-luminescence (EL) display, and the like. Further, an illumination device for illuminating the video display element 20 may be arranged. The illumination device includes, for example, an illumination optical system or the like including a light source such as a light emitting diode (LED) and a condensing optical element (lens, mirror, and the like).

Fig. 2 illustrates hologram reproduction by the holographic optical element 13 with the use of the optical device 10. In the hologram reproduction, when the image light (reproduction illumination light) L1 enters the holographic optical element 13 formed on the first prism 11, the reproduced image light L2 is diffracted and reflected. The reproduced image light L2 enters the observer's eye EY together with the external light L3 transmitted through the holographic optical element 13. Therefore, the observer can observe the external image together with the displayed video image. In addition, the first prism 11, which is a transparent base material, is configured to totally reflect the image light L1 from the video display element 20 internally and to guide it to the holographic optical element 13. Therefore, the image light L1 emitted from the video display element 20 can be utilized without being wasted, and a bright video image can be provided to the observer,

The video display element 20 has light emission peak wavelengths corresponding to the three primary colors R, G, and B in the image light L1, and the holographic optical element 13 has diffraction peak wavelengths corresponding to the light emission peak wavelengths. The diffraction amount ratio of G is in the range of 5 to 25% and the smallest among the diffraction amount ratios of R, G, and B. The light emission amount ratios of R, G, and B differ from R : G : B = 1: 1: 1, and the light emission amount ratio of G is in the range of 50 to 90% and the largest among the light emission amount ratios of R, G, and B. The image light L1 becomes white reproduced image light L2 with an x, y chromaticity of 0.33 ± 0.05 in the XYZ colorimetric system by diffraction reflection at the holographic optical element 13. The diffraction action of G is weak in the diffraction characteristic $D(\lambda)$ of the holographic optical element 13, and the light emission of G is strong in the light emission characteristic $L(\lambda)$ of the video display element 20. Therefore, both the see-through property and the color balance are good. Therefore, in see-through display in which a video image is superimposed on an external image, it is possible to observe the external image with a high see-through property while keeping the quality of the displayed video image high.

The optical device 10 functions as an eyepiece optical system that projectively displays a video image as an enlarged virtual image on the observer's eye EY in a see-through manner such that the video image of the video display element 20 is superimposed on the external image via the holographic optical element 13 between the joined first and second prisms 11 and 12. Therefore, it is desirable that the holographic optical element 13 be a volume phase type reflective hologram. Since the volume phase type reflective hologram has high transmittance of light of the external image, if the volume phase type reflective hologram is used as the holographic optical element 13, the observer can clearly observe the external image together with the displayed video image.

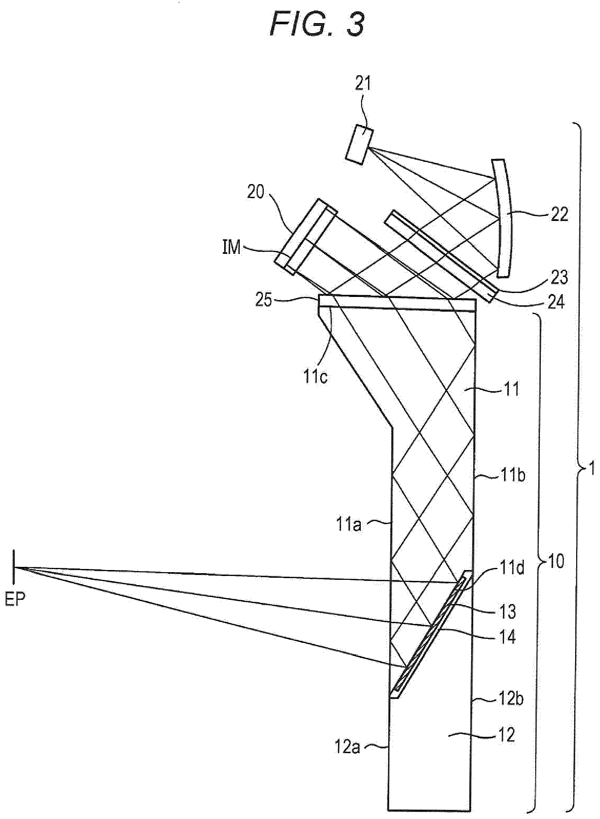

Fig. 3 is a diagram illustrating a more specific optical configuration of the video display device 1 (Fig. 2). Fig. 3 illustrates the optical path from a light source 21 in the video display device 1 including the illumination device or the like to an optical pupil EP. In addition to the illumination device, the video display device 1 includes a polarizing plate 24, a polarizing beam splitter 25, the video display element 20, and the optical device 10 that functions as an eyepiece optical system.

The illumination device illuminates the video display element 20, and includes the light source 21, an illumination mirror 22, and a diffusion plate 23. The light source 21 includes an RGB-integrated LED which emits light of three wavelength bands having light emission peak wavelengths of, for example, 450 nm, 532 nm, and 640 nm. The illumination mirror 22 is an optical element (for example, free-form surface mirror) that reflects the light (illumination light) emitted from the light source 21 toward the diffusion plate 23, and bends the illumination light so that the optical pupil EP and the light source 21 are substantially conjugate with each other. The diffusion plate 23 diffuses the illumination light from the light source 21, and the diffusing degree differs depending on the direction (for example, the diffusion plate 23 is a unidirectional diffusion plate having a diffusing action only in the lateral direction).

The polarizing plate 24 has the diffusion plate 23 bonded and held on its surface. The polarizing plate 24 transmits light having a predetermined polarization direction out of the light that has entered through the diffusion plate 23, and guides the light to the polarizing beam splitter 25. The orientation of the polarizing beam splitter 25 is adjusted such that the polarized light transmitted through the polarizing plate 24 is reflected by the polarizing beam splitter 25. The polarizing beam splitter 25 is a plate-like polarization split element that reflects the light transmitted through the polarizing plate 24 in the direction of the reflective video display element 20, and transmits light corresponding to image signal ON (light whose polarization direction is orthogonal to the light transmitted through the polarizing plate 24) out of the light reflected by the video display element 20. The polarizing beam splitter 25 is affixed to a prism surface 11c of the prism 11.

The video display element 20 is a video display element which modulates the light from the illumination device (that is, the light reflected by the polarizing beam splitter 25) to display a video image IM. In this video display device 1, the video display element 20 can be a reflective liquid crystal display element. Note that the video display element 20 may include color filters, or may be driven time-divisionally for each of R, G, and B.

The video display element 20 is arranged such that light that enters substantially perpendicularly from the polarizing beam splitter 25 is reflected substantially perpendicularly to the polarizing beam splitter 25. This facilitates optical design for increasing resolution to a greater degree than a configuration that causes light to enter a reflective video display element with a large incident angle. The video display element 20 is arranged on the same side as the light source 21 with respect to the optical path from the illumination mirror 22 to the polarizing beam splitter 25. Thus, the entire optical system from the illumination device to the video display element 20 can be made compact. Note that the video display element 20 may be supported by the same substrate as the light source 21, or may be supported by a different substrate.

The optical device 10 has the prism 11, the prism 12, and the holographic optical element 13. The prisms 11 and 12 are made of plastic (for example, acrylic resin, polycarbonate, cycloolefin resin, and the like). The optical device 10 has a non-axi symmetric (non-rotationally symmetric) positive optical power in the holographic optical element 13, and thus functions as an eyepiece optical system for guiding the image light from the video display element 20 to the optical pupil EP. The prism 11 internally guides the image light that has entered from the video display element 20 through the polarizing beam splitter 25 while transmitting external image light (external light). The prism 11 is configured by making the upper end portion of a parallel flat plate thicker toward the upper end and making the lower end portion thinner toward the lower end.

The prism surface 11c of the prism 11 to which the polarizing beam splitter 25 is affixed is the optical surface that image light from the video display element 20 first enters. Two prism surfaces 11a and 11b which are positioned substantially in parallel with the optical pupil EP and face each other are totally reflective surfaces for guiding the image light by total reflection. Among them, the prism surface 11a close to the optical pupil EP also serves as the exit surface for the image light diffracted and reflected by the holographic optical element 13.

The prism 11 is joined to the prism 12 with the adhesive 14 so as to sandwich the holographic optical element 13 arranged at the lower end portion thereof to form a substantially parallel flat plate. By bonding the prism 12 to the prism 11, the refraction that occurs when external light passes through the wedge-shaped lower end portion of the prism 11 can be canceled by the prism 12, and distortion in the observed external image can be prevented. The holographic optical element 13 is a volume phase type reflective holographic optical element that is provided in contact with a prism surface 11d of the prism 11 and diffracts and reflects the image light guided inside the prism 11. The diffraction wavelengths of R, G, and B of the holographic optical element 13 substantially correspond to the wavelengths of image light of R, G, and B (light emission wavelengths of the light source 21).

In the above configuration, the light emitted from the light source 21 of the illumination device is reflected by the illumination mirror 22 and diffused only in one direction by the diffusion plate 23. After that, only light in a predetermined polarization direction passes through the polarizing plate 24. Then, the light transmitted through the polarizing plate 24 is reflected by the polarizing beam splitter 25 and enters the video display element 20. In the video display element 20, the incident light is modulated in accordance with an image signal. At this time, the image light corresponding to image signal ON is converted by the video display element 20 into light whose polarization direction is orthogonal to the incident light, and emitted therefrom. Therefore, the light passes through the polarizing beam splitter 25 and enters the prism 11 through the prism surface 11c. On the other hand, the image light corresponding to image signal OFF is emitted without being subjected to the conversion of the polarization direction by the video display element 20. Therefore, the light is blocked by the polarizing beam splitter 25 and does not enter the prism 11.

In the prism 11, incident image light is totally reflected once by each of the facing two prism surfaces 11a and 11b of the prism 11, and then enters the holographic optical element 13. In the holographic optical element 13, only light of specific wavelengths (three wavelengths corresponding to R, G, and B) is diffracted and reflected, exits from the prism surface 11a, and reaches the optical pupil EP. Therefore, the observer can observe the video image IM displayed on the video display element 20 at the position of the optical pupil EP as a virtual image. On the other hand, since the prism 11, the prism 12, and the holographic optical element 13 transmit almost all of the external light, the observer can observe the external image in a see-through manner. Therefore, the virtual image of the video image IM displayed on the video display element 20 is superimposed on a part of the external image for observation.

Since the holographic optical element 13 constitutes a combiner for simultaneously guiding the video image displayed on the video display element 20 and the external image to the observer's eye EY, the observer can simultaneously observe the video image provided by the video display element 20 and the external image via the holographic optical element 13. Therefore, by mounting the above-described video display device 1 (Figs. 1 to 3), it is possible to constitute an optical see-through display having the function of projectively displaying the video image IM on the observer's eye EY with the optical device 10 in a see-through manner.

As described above, it is desirable that the optical see-through display include the video display device 1 to have the function of projectively displaying the video image on the observer's eye EY with the holographic optical element 13 in a see-through manner. It is further desirable that the optical see-through display be a head mounted display having a support member that supports the video display device 1 such that the holographic optical element 13 is positioned in front of the observer's eye EY (that is, supports the video display device 1 in front of the observer's eye). Since the video display device 1 has a high see-through property, a high video image display effect can be obtained by arranging the video display device 1 such that a video image is displayed in front of the observer's eye. Examples of the optical see-through display include a head mounted display (HMD), a head-up display (HUD), and the like. Example forms of head mounted displays include eyeglasses, helmets, and the like, and example applications of head-up displays are for driving of automobiles, for maneuvering airplanes, and the like. Here, an eyeglasses-type head mounted display including the video display device 1 and an in-vehicle head-up display including the video display device 1 will be described as examples below.

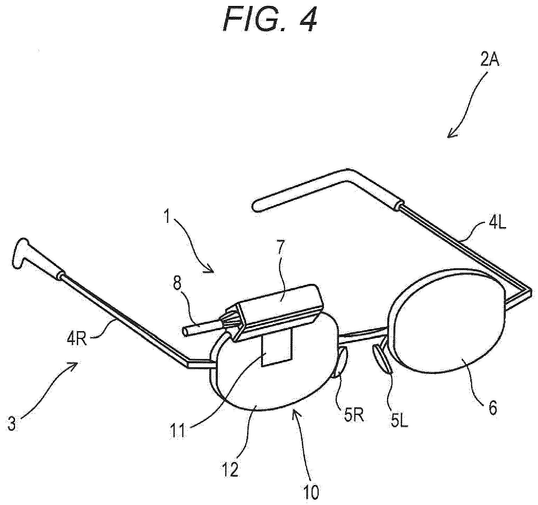

Fig. 4 is a diagram illustrating a schematic configuration of an eyeglasses-type head mounted display 2A including the video display device 1. The head mounted display 2A includes the above-described video display device 1 and a support member 3. The video display element 20, the illumination device, and the like of the video display device 1 are accommodated in a housing 7, and the upper end portion of the optical device 10 which is the eyepiece optical system is also located in the housing 7. As described above, the optical device 10 includes the bonded two prisms 11 and 12 which are prisms, and has, as a whole, a shape like one lens of eyeglasses (lens for the right eye in Fig. 4).

Further, the video display element 20, the light source 21, and the like in the housing 7 are coupled to a circuit board (not illustrated) via a cable 8 provided through the housing 7. Driving power and image signals are supplied from the circuit board to the video display element 20, the light source 21, and the like. The video display device 1 may further include an imaging device for capturing a still image or a moving image, a microphone, a speaker, an earphone, and the like to exchange (transmit and receive) information of a captured image and a display image or audio information with an external server or a terminal via a communication line such as the Internet.

The support member 3 is a support mechanism corresponding to the frame of eyeglasses, and supports the video display device 1 in front of the observer's eye (in front of the right eye in Fig. 4). The support member 3 includes temples 4R and 4L which abut against the left and right temporal portions of the observer, and nose pads 5R and 5L which abut against the nose of the observer. Although the support member 3 also supports a lens 6 in front of the left eye of the observer, this lens 6 is a dummy lens.

When the head mounted display 2A is worn on the head of the observer and a video image is displayed on the video display element 20, the image light is guided to the optical pupil EP (Fig. 3) via the optical device 10. Therefore, by matching the observer's pupil (observer's eye EY) to the position of the optical pupil EP, the observer can observe the enlarged virtual image of the displayed video image of the video display device 1. At the same time, the observer can observe the external image in a see-through manner via the optical device 10. It is also possible to use two video display devices 1 so that video images can be observed with both eyes.

As described above, the video display device 1 is supported by the support member 3, so that the observer can stably observe the displayed video image provided by the video display device 1 and the external image at the same time in a hands-free manner for a long time, and can perform desired work with his/her free hands. In addition, since the observing direction of the observer is determined in one direction, the observer can advantageously find the displayed video image easily even in the dark environment. Therefore, the head mounted display 2A is suitable for use in work at a dimly lit place (for example, indoor places such as warehouses and factories) where a high visibility transmittance Tv is required. It is also suitable for use as a visual aid device worn in front of the eyes of a person with low vision, especially a person suffering from nyctalopia. For example, while the video image of the outside world is photographed by the camera and displayed on the video display device 1, the outside world may become dark and the video image display can become difficult, but the external image can still be observed in a see-through manner with a high visibility transmittance Tv.

Fig. 5 is a diagram illustrating a schematic configuration of an in-vehicle head-up display 2B including the video display device 1. The main component of the head-up display 2B is the video display device 1, and the video display device 1 is arranged such that the holographic optical element 13 is located in front of the observer's eye EY (that is, in front of the driver's eye). The holographic optical element 13 is provided on the surface or inside of a windshield 30. Information (for example, navigation) is displayed on the video display element 20 as a video image, the image light (reproduction illumination light) L1 enters the holographic optical element 13, and the reproduced image light L2 is diffracted and reflected. The reproduced image light L2 enters the observer's eye EY together with the external light L3 transmitted through the holographic optical element 13.

Since the video image displayed on the video display element 20 is projectively displayed on the observer's eye EY in a see-through manner, the field of view in front is not blocked. In the case of use at night, the visibility of the outside world is low if the visibility transmittance Tv of the holographic optical element is low. However, since the visibility transmittance Tv of the holographic optical element 13 of the video display device 1 mounted on the head-up display 2B is high, it is possible to observe the external image with a high see-through property.

As can be understood from the above description, each embodiment described above and each example described below include the following characteristic configurations (#1) to (#6) and the like.

(#1): A video display device including:

a video display element that displays a video image by emission of image light including visible light; and
a holographic optical element that diffracts and reflects the image light, wherein
the video display element has light emission peak wavelengths corresponding to three primary colors R, G, and B in the image light,
the holographic optical element has diffraction peak wavelengths corresponding to the light emission peak wavelengths, and
assuming that:

a diffraction amount at wavelengths of 400 to 490 nm is a diffraction amount of B;
a diffraction amount at wavelengths of 490 to 580 nm is a diffraction amount of G;
a diffraction amount at wavelengths of 580 to 680 nm is a diffraction amount of R;

(diffraction amount of B)/(sum of diffraction amounts of R, G, and B) is a diffraction amount ratio of B;
(diffraction amount of G)/(sum of diffraction amounts of R, G, and B) is a diffraction amount ratio of G; and
(diffraction amount of R)/(sum of diffraction amounts of R, G, and B) is a diffraction amount ratio of R,
the diffraction amount ratio of G is in a range of 5 to 25% and the smallest among the diffraction amount ratios of R, G, and B.

(#2): The video display device according to (#1), wherein assuming that:

a light emission amount at wavelengths of 400 to 490 nm is a light emission amount of B;
a light emission amount at wavelengths of 490 to 580 nm is a light emission amount of G;
a light emission amount at wavelengths of 580 to 680 nm is a light emission amount of R;
(light emission amount of B)/(sum of light emission amounts of R, G, and B) is a light emission amount ratio ofB;
(light emission amount of G)/(sum of light emission amounts of R, G, and B) is a light emission amount ratio of G; and
(light emission amount of R)/(sum of light emission amounts of R, G, and B) is a light emission amount ratio of R,
the light emission amount ratios of R, G, and B differ from R : G : B = 1: 1: 1, and the light emission amount ratio of G is in a range of 50 to 90% and the largest among the light emission amount ratios of R, G, and B.

(#3): The video display device according to (#1) or (#2), wherein the image light becomes white reproduced image light with an x, y chromaticity of $0.33 \pm 0.05$ in an XYZ colorimetric system by diffraction reflection at the holographic optical element.

(#4): The video display device according to any one of (#1) to (#3), further including
a transparent base material that guides the image light to the holographic optical element, wherein
the holographic optical element is formed on the transparent base material,
the transparent base material and the holographic optical element constitute an eyepiece optical system that enlarges a video image displayed on the video display element and guides the video image as a virtual image to an observer's eye, and
the holographic optical element constitutes a combiner that simultaneously guides the video image displayed on the video display element and an external image to the observer's eye.

(#5): An optical see-through display including the video display device according to any one of (#1) to (#4) to have a function of projectively displaying the video image on the observer's eye with the holographic optical element in a see-through manner.

(#6): The optical see-through display according to (#5), further including a support member that supports the video display device such that the holographic optical element is positioned in front of the observer's eye.

Examples

Hereinafter, the configuration and the like of the video display device implementing the present invention will be described in more detail with reference to data of Example and Comparative Example. Example given here is a numerical example corresponding to the above-described embodiment, and the cross-sectional diagrams (Figs. 1 to 3) illustrating the embodiment show the optical arrangement, the optical path, and the like of the corresponding example. Since the comparison with a half mirror is assumed, the difference between Comparative Example and Example is in the diffraction characteristic $D(\lambda)$ of the holographic optical element 13 and the light emission characteristic $L(\lambda)$ of the video display element 20. Table 1 illustrates data of Comparative Example and Example, and Fig. 7 illustrates the light emission characteristic $L(\lambda)$ and the diffraction characteristic $D(\lambda)$ at white adjustment in Comparative Example and Example.

Since the comparison with a half mirror is assumed, in Comparative Example, the video display element 20 is caused to emit light in white to display white. Regarding the light emission characteristic $L(\lambda)$ of the video display element 20, the light emission peak wavelengths for R, G, and B are set to 640 nm, 532 nm, and 450 nm, respectively, and the full widths at half maximum for R, G, and B are set to 20.0 nm, 16.6 nm, and 14.1 nm, respectively. When adjusting the x, y chromaticity such that x = 0.33 and y = 0.33 are satisfied in order to cause the video display element 20 to emit light in white, the light emission efficiencies (peak heights) are 0.53, 0.37, and 0.29. In a case where the holographic optical element 13 is used as a combiner for the video display element 20, regarding the diffraction characteristic $D(\lambda)$ of the holographic optical element 13, the diffraction peak wavelengths for R, G, and B are set to 640 nm, 532 nm, and 450 nm, respectively, the full widths at half maximum for R, G, and B are set to 20.0 nm, 16.6 nm, and 14.1 nm, respectively, and the diffraction reflection efficiencies (peak heights) for R, G, and B are set to 0.50, 0.50, and 0.50, respectively. At this time, the ratio of the diffraction amount of G to the sum of the diffraction amounts of R, G, and B is 33%. In this case, the visibility transmittance is Tv = 90.7%, and a loss of 9.3% occurs.

In Example, in order to improve the visibility transmittance Tv, the ratio of the diffraction amount of G to the sum of the diffraction amounts of R, G, and B is set to 10%. Regarding the diffraction characteristic $D(\lambda)$ of the holographic optical element 13, the diffraction peak wavelengths for R, G, and B are set to 640 nm, 532 nm, and 450 nm, respectively, the full widths at half maximum for R, G, and B are set to 20.0 nm, 16.6 nm, and 14.1 nm, respectively, and the diffraction reflection efficiencies (peak heights) for R, G, and B are set to 0.70, 0.15, and 0.65, respectively. Regarding the light emission characteristic $L(\lambda)$ of the video display element 20, the light emission peak wavelengths for R, G, and B are set to 640 nm, 532 nm, and 450 nm, respectively, and the full widths at half maximum for R, G, and B are set to 20.0 nm, 16.6 nm, and 14.1 nm, respectively. At this time, when adjusting the x, y chromaticity such that x = 0.33 and y = 0.33 are satisfied in order to deliver a white image to the observer's pupil, the light emission efficiencies (peak heights) are 0.25, 0.80, 0.15. In this case, the visibility transmittance is Tv = 94.9%, and a loss of 5.1% occurs. That is, the loss amount is about 55% of that of Comparative Example.

Although Example mainly describes the control for the diffraction efficiency (peak height), the actual control is not limited to this example, but it is also effective to change the peak wavelength position or the full width at half maximum. As the video display element 20, it is possible to use a light source such as an LED in combination with a spatial modulation element such as a liquid crystal display element, or to use a self-luminous display element such as an organic EL. Other video display elements may also be used. It should be noted that Example given here is merely an example, and the present invention is not limited to the scope of Example.

[Table 1]

| | | Comparative example | | | Example | | |
|---|---|---|---|---|---|---|---|
| | | Holographic optical element | | | Holographic optical element | | |
| | | R | G | B | R | G | B |
| Full width at half maximum (nm) | | 20.0 | 16.6 | 14.1 | 20.0 | 16.6 | 14.1 |
| Diffraction peak wavelength (nm) | | 640 | 532 | 450 | 640 | 532 | 450 |
| Diffraction reflection efficiency (peak height) | | 0.50 | 0.50 | 0.50 | 0.70 | 0.15 | 0.65 |
| Diffraction amount | | 10.6 | 8.8 | 7.5 | 15.0 | 2.7 | 9.7 |
| Diffraction amount ratio (%) | | 39 | 33 | 28 | 55 | 10 | 35 |
| | | Video display element | | | Video display element | | |
| | | R | G | B | R | G | B |
| Full width at half maximum (nm) | | 20.0 | 16.6 | 14.1 | 20.0 | 16.6 | 14.1 |
| Light emission peak wavelength (nm) | | 640 | 532 | 450 | 640 | 532 | 450 |
| Light emission efficiency (peak height) | | 0.53 | 0.37 | 0.29 | 0.25 | 0.80 | 0.15 |
| Light emission amount | | 11.4 | 6.6 | 4.4 | 5.3 | 14.2 | 2.2 |
| Light emission amount ratio (%) | | 51 | 29 | 20 | 24 | 65 | 10 |
| Visibility transmittance Tv (%) | | 90.7 | | | 94.9 | | |

Reference Signs List

| | |
|---|---|
| 1 | video display device |
| 2A | head mounted display (optical see-through display) |
| 2B | head-up display (optical see-through display) |
| 3 | support member |
| 4R, 4L | temple |
| 5R, 5L | nose pad |
| 6 | lens |
| 7 | housing |
| 8 | cable |

| 10 | optical device (eyepiece optical system) |
| 11 | first prism (transparent base material) |
| 11a, 11b, 11c, 11d | prism surface |
| 12 | second prism |
| 13 | holographic optical element |
| 14 | adhesive |
| 20 | video display element |
| 21 | light source |
| 22 | illumination mirror |
| 23 | diffusion plate |
| 24 | polarizing plate |
| 25 | polarizing beam splitter |
| 30 | windshield |
| L1 | image light |
| L2 | reproduced image light |
| L3 | external light |
| IM | video image |
| EY | observer's eye |
| EP | optical pupil |

**Claims**

1. A video display device comprising:

a video display element that displays a video image by emission of image light including visible light; and
a holographic optical element that diffracts and reflects the image light, wherein
the video display element has light emission peak wavelengths corresponding to three primary colors R, G, and B in the image light,
the holographic optical element has diffraction peak wavelengths corresponding to the light emission peak wavelengths, and
assuming that:

a diffraction amount at wavelengths of 400 to 490 nm is a diffraction amount of B;
a diffraction amount at wavelengths of 490 to 580 nm is a diffraction amount of G;
a diffraction amount at wavelengths of 580 to 680 nm is a diffraction amount of R;
(diffraction amount of B)/(sum of diffraction amounts of R, G, and B) is a diffraction amount ratio of B;
(diffraction amount of G)/(sum of diffraction amounts of R, G, and B) is a diffraction amount ratio of G; and
(diffraction amount of R)/(sum of diffraction amounts of R, G, and B) is a diffraction amount ratio of R,
the diffraction amount ratio of G is in a range of 5 to 25% and the smallest among the diffraction amount ratios of R, G, and B.

2. The video display device according to claim 1, wherein assuming that:

a light emission amount at wavelengths of 400 to 490 nm is a light emission amount of B;
a light emission amount at wavelengths of 490 to 580 nm is a light emission amount of G;
a light emission amount at wavelengths of 580 to 680 nm is a light emission amount of R;
(light emission amount of B)/(sum of light emission amounts of R, G, and B) is a light emission amount ratio of B;
(light emission amount of G)/(sum of light emission amounts of R, G, and B) is a light emission amount ratio of G; and
(light emission amount of R)/(sum of light emission amounts of R, G, and B) is a light emission amount ratio ofR,
the light emission amount ratios of R, G, and B differ from R : G : B = 1: 1: 1, and the light emission amount ratio of G is in a range of 50 to 90% and the largest among the light emission amount ratios of R, G, and B.

3. The video display device according to claim 1 or 2, wherein the image light becomes white reproduced image light with an x, y chromaticity of $0.33 \pm 0.05$ in an XYZ colorimetric system by diffraction reflection at the holographic optical element.

**4.** The video display device according to any one of claims 1 to 3, further comprising
a transparent base material that guides the image light to the holographic optical element, wherein
the holographic optical element is formed on the transparent base material,
the transparent base material and the holographic optical element constitute an eyepiece optical system that enlarges a video image displayed on the video display element and guides the video image as a virtual image to an observer's eye, and
the holographic optical element constitutes a combiner that simultaneously guides the video image displayed on the video display element and an external image to the observer's eye.

**5.** An optical see-through display comprising the video display device according to any one of claims 1 to 4 to have a function of projectively displaying the video image on the observer's eye with the holographic optical element in a see-through manner.

**6.** The optical see-through display according to claim 5, further comprising a support member that supports the video display device such that the holographic optical element is positioned in front of the observer's eye.

# FIG. 1

(A)

(B)

## FIG. 2

# FIG. 3

# FIG. 4

# FIG. 5

# FIG. 6

RELATIVE VISIBILITY

# FIG. 7

## (A)

### WHITE ADJUSTMENT IN COMPARATIVE EXAMPLE

LIGHT EMISSION CHARACTERISTIC L(λ)

TRANSMITTANCE DIFFRACTION (CHARACTERISTIC D(λ))

WAVELENGTH λ (nm)

—— LIGHT EMISSION CHARACTERISTIC

- - - HOLOGRAM DIFFRACTION CHARACTERISTIC

## (B)

### WHITE ADJUSTMENT IN EXAMPLE

LIGHT EMISSION CHARACTERISTIC L(λ)

TRANSMITTANCE DIFFRACTION (CHARACTERISTIC D(λ))

WAVELENGTH λ (nm)

—— LIGHT EMISSION CHARACTERISTIC

- - - HOLOGRAM DIFFRACTION CHARACTERISTIC

## INTERNATIONAL SEARCH REPORT

| International application No. |
|---|
| PCT/JP2017/030172 |

A. CLASSIFICATION OF SUBJECT MATTER
*G02B27/02*(2006.01)i, *B60K35/00*(2006.01)i, *G02B5/26*(2006.01)i, *G02B5/28* (2006.01)i, *G02B5/32*(2006.01)i, *G02B27/01*(2006.01)i, *H04N5/64*(2006.01)i

According to International Patent Classification (IPC) or to both national classification and IPC

B. FIELDS SEARCHED

Minimum documentation searched (classification system followed by classification symbols)
G02B27/02, B60K35/00, G02B5/26, G02B5/28, G02B5/32, G02B27/01, H04N5/64

Documentation searched other than minimum documentation to the extent that such documents are included in the fields searched
Jitsuyo Shinan Koho        1922-1996    Jitsuyo Shinan Toroku Koho    1996-2017
Kokai Jitsuyo Shinan Koho    1971-2017    Toroku Jitsuyo Shinan Koho    1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-271526 A (Konica Minolta Opto, Inc.), 02 December 2010 (02.12.2010), paragraphs [0018] to [0094]; fig. 1 to 12 (Family: none) | 1-6 |
| A | JP 2008-250254 A (Brother Industries, Ltd.), 16 October 2008 (16.10.2008), paragraphs [0021] to [0080]; fig. 1 to 12 (Family: none) | 1-6 |
| A | US 2016/0116739 A1 (MAGIC LEAP, INC.), 28 April 2016 (28.04.2016), entire text; all drawings & WO 2016/054092 A1 & CA 2962899 A1 & KR 10-2017-0065609 A & CN 107111204 A | 1-6 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 October 2017 (16.10.17) | 24 October 2017 (24.10.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000276036 A

- JP 2006184869 A